# EUROPEAN PATENT APPLICATION

(11) **EP 4 383 402 A1**
(43) Date of publication of application: **12.06.2024**
(21) Application number: 22952698.3
(22) Date of filing: 19.09.2022
(51) Int. Cl.: H01M 10/44

(54) **AIR BAG TYPE FORMATION PROBE POWER-CONNECTION MECHANISM FOR POUCH BATTERY**

(30) Priority: 25.07.2022 CN 202210879271
(71) Applicant: Zhejiang Hangke Technology Incorporated Company, Hangzhou, Zhejiang 310000 (CN)
(72) Inventor: GUO, Kaihua, Hangzhou, Zhejiang 311231 (CN); LI, Peng, Hangzhou, Zhejiang 311231 (CN); CAO, Ji, Hangzhou, Zhejiang 311231 (CN); CAO, Zheng, Hangzhou, Zhejiang 311251 (CN)
(74) Representative: Lermer, Christoph
(86) International application number: PCT/CN2022/119507
(87) International publication number: WO 2024/021257

(57) **Abstract**

The present invention discloses an electric connection mechanism with airbag type formation probe for soft pack batteries, which comprises a queue formed by aluminum plates which are parallel to each other and arranged at intervals; the left end and the right end of the aluminum plate are each provided with an electric connection device, which is longitudinally aligned with that of the adjacent aluminum plates; the electric connection device comprises an upper sliding block and a lower sliding block, a first airbag unit arranged on the front surface, and a secondary airbag unit arranged on the rear surface; the outer side of the first airbag unit is provided with a tab contact plate, the outer side of the secondary airbag unit is provided with an airbag pressing plate, the ends of the aluminum plate are inserted into a sleeve formed by the first airbag unit, the second airbag unit, the upper sliding block and the lower sliding block; a reset mechanism arranged between the ends of the tab contact plate and the upper sliding block or the lower sliding block, and between the ends of the airbag pressing plate and the upper sliding block or the lower sliding block comprises a reset spring; and the tab contact plate is connected with an external power supply through a current lead and a voltage lead. The beneficial effect of the present invention is as follow: automatically adapt to various thickness of soft pack batteries by the high accuracy and certainty of action.

## Description

The present invention pertains to the technical field of high-temperature charging and discharging formation equipment of polymer lithium ion battery, and particularly relates to an electric connection mechanism with airbag type formation probe for soft pack batteries.

The power soft pack battery is one of main batteries applied to a new energy vehicle; The power soft pack battery needs to be subjected to high-temperature formation to activate the battery cell in the process of production, the power battery needs to be charged and discharged by the driving box in the formation process. In the existing process, the power battery is placed between a pair of fixtures of the high-temperature fixture machine, the fixture pressurizes the power battery at high temperature, meanwhile, the electric connection assembly with contact plate type probe clamps the tab of battery to activate the battery cell by the charging and discharging formation process. Good contact between the electric connection assembly with contact plate type probe and the tab of battery must be ensured in the charging and discharging process of the battery.

A traditional electric connection assembly with contact plate type probe mostly adopts a tower spring mechanism, which applies pressure to the tab through deformation of the tower spring, ensuring the good contact between the tab of battery and the contact plate. In practice, the high-temperature fixture machine needs to process power soft pack batteries of different models, which may bring out the limitation of the tower spring type mechanism. Due to the large difference between the thickness parameters of the power soft pack batteries of different models, different thickness of silica gel or subplate of contact plate may be applied in the electric connection assembly with contact plate type probe while the high-temperature fixture machines charge and discharge batteries with different thicknesses. Additionally, it is necessary to fill the vacancy with the dummy battery to pressurize if the mechanism cannot be full filled with the real batteries, otherwise the electric connection assembly with contact plate type probe may be damaged.

The electric connection assembly with contact plate type probe provided with tower spring type mechanism has rigid requirement for the size of the processed battery, and the adjustment process is time-consuming and tedious. A large amount of adjustment for the mechanism are needed to process with batteries with different thicknesses, which may reduce working efficiency of charging and discharging of the power soft pack batteries in a great extent. Batteries with different thickness may not be compatible in the mechanism without complex adjustment, making it unsuitable for handling small batches and a variety of battery types. Additionally the high-temperature fixture machine is prone to damaged.

In order to overcome the lack of flexibility in the tower spring mechanism of the electric connection assembly with contact plate type probe in response to changes in the size of the processed batteries, an inflatable mechanism for the electric connection assembly with contact plate type probe is proposed to improve the flexibility by the airbag in the process. CN212461961U, titled "Battery formation and capacity grading power connection device and battery formation and capacity grading clamp", discloses an airbag arranged at the rear of the electric connection plate, which is pushed by the ventilated and inflated airbag to clamp the tab of battery with an opposite airbag arranged on the adjacent laminated board. The drawback of the inflatable mechanism is the lack of accuracy and certainty in the movement of of mechanical components, while the accuracy of the movement and spatial orientation of the fixture components is crucial during the battery formation and capacity grading process. It is necessary for the tab of battery to be parallel to the laminated board during formation and capacity grading, and if the electric connection plate (ie, the tab contact plate) cannot maintain the parallel spatial orientation with the tab of battery while the airbag inflates, the electric connection plate and the tab of battery may not form a flat contact but only a point or line contact. In this case, the current region and the voltage region on the electric connection plate cannot establish simultaneous electrical contact with the tab of battery, leading to operational failure, and if excessive pressure is forcibly applied to ensure a flat contact between the electric connection plate and the tab of battery, it may cause deformation and damage of the tab of battery.

In addition, the resetting accuracy of the fixture mechanism's moving components is not precise. A low-elasticity and high-rigidity material is generally adopted to control the extent of expansion of the airbag after being filled with high-pressure gas. However, after the high-pressure gas is released, the airbag material experiences residual deformation and cannot fully restore its original shape. This leads to inaccurate resetting of components such as the contact plate. As the number of uses increases, the residual deformation of the airbag becomes more significant, resulting in a larger resetting error of the contact plate. As a consequence, the dimensional certainty of the fixture machine's stations is lost, affecting the placement of the battery into the stations.

The electric connection plate of the CN212461961U is directly connected to the outer surface of the first airbag through side limit plates and limit pins installed on the first mounting base and the second mounting base. The drawbacks of the design are as follows (1) After inflation, the cross section of the first airbag takes on an arched shape, which cannot provide stable support for the electric connection plate, and the contact plate is prone to lateral tilting as a result; (2) The accuracy of electric connection plate resetting is poor. When the first airbag is deflated, the residual deformation of the airbag, which increases with usage, prevents the contact plate from resetting accurately. This leads to the inability to control the gap (namely a station gap) between the electric connection plate and the secondary airbag accurately. Consequently, when inserting the battery into the gap, interference with the ends occurs, resulting in deformation. The limiting plate and the limiting pin installed at the end of the electric connection plate can only restrict the its maximum travel distance, but they cannot guarantee the spatial orientation of the electric connection plate during movement. Once the contact plate tilts, it fails to establish good contact with the tab of battery. Therefore, the certainty and reliability of the connection between the electric connection plate and the tab of battery of CN212461961U are poor, which can cause interference with the tabs, leading to air gaps, the repeated use of the whole mechanism may be affected, making it impractical for actual application in production lines.

### Invention content

In order to overcome the aforementioned drawbacks of existing technologies, the present invention provides an electric connection mechanism with airbag type formation probe for soft pack batteries.

The electric connection mechanism with airbag type formation probe for soft pack batteries provided by the invention not only has the flexibility to accommodate size variation of processed batteries, but also has the precision and the certainty in component actions, thus ensuring high reliability in large-scale production. The mechanism of the present invention may be suitable for soft pack batteries with various thicknesses without adjustments, which allow for the pressing action without dummy batteries under the condition of non-full load in the mechanism, while enhancing the reliability and certainty of contact between the tab and the electric connection mechanism.

The electric connection mechanism with airbag type formation probe for soft pack batteries in the present invention comprises a queue formed by parallel and spaced aluminum plates. The aluminum plates are perpendicular to the longitudinal axis of the queue, and an electric heating component is installed on the aluminum plates, the surfaces of the aluminum are covered with insulating layers, and the space between each two adjacent aluminum plates forms a station for clamping a battery; the longitudinal axis of the queue is defined as a longitudinal direction, with one direction of the longitudinal direction defined as the forward direction and the other direction defined as a backward direction; the aluminum plate is rectangular, and the surface of the aluminum plate facing the forward direction is defined as the front surface, while the surface facing the backward direction is defined as the rear surface. The extending direction of one edge of the aluminum plate is defined as the left-right direction, while the extending direction of the other edge is defined as the upper-lower direction;
The left end and the right end of the aluminum plate are each equipped with an electric connection device, which is longitudinally aligned with that of the adjacent aluminum plates;
The electric connection device comprises an upper sliding block slidably positioned on the upper edge of the aluminum plate, a lower sliding block slidably positioned on the lower edge, a first airbag unit located on the front surface, and a secondary airbag unit located on the rear surface;
The direction closer to the aluminum plate within the electric connection device is defined as inner side, while the opposite direction is referred to as the outer side; the outer side of the first airbag unit is equipped with a tab contact plate, the outer side of the secondary airbag unit is equipped with an airbag pressing plate. The upper ends and the lower ends of the tab contact plate, the first airbag unit, the secondary airbag unit and the airbag pressing plate are connected to an upper sliding block and a lower sliding block correspondingly; the ends of the aluminum plate pass through a sleeve formed by the first airbag unit, the secondary airbag unit, the upper sliding block and the lower sliding block;
Between the ends of the tab contact plate and the upper sliding block, as well as between the end of the tab contact plate and the lower sliding block , and also between the ends of the airbag pressing plate and the upper sliding block, as well as between the airbag pressing plate and the lower sliding block, there are reset mechanisms provided, which include a reset spring;
The first airbag unit comprises a first airbag fixing plate which is equipped with multiple first airbags on its outer side, the secondary airbag unit comprises a secondary airbag fixing plate which is equipped with multiple secondary airbags on its outer side, both the first airbags and secondary airbags are strip-shaped and connected to an external air source; the tab contact plate is connected to an external power source via a current lead and a voltage lead.

Preferably, the number of the first airbag and the secondary airbag is both two, and the first airbags are parallelly arranged along the length direction of the first airbag fixing plate, while the secondary airbags are parallelly arranged along the length direction of the secondary airbag fixing plate.

Preferably, the reset mechanism comprises a longitudinal hole on the upper sliding block or the lower sliding block with a flat-top screw placed inside each hole that can move along the longitudinal direction, the tail end of the flat-top screw extends out of the hole and is connected to a pin; a pressing spring is positioned between the nail cap of the flat-top screw and the wall surface of the hole, which compresses the nail cap of the flat-top screw against the bottom of the hole; among them, the cap of the pin installed in the hole facing the front side is fastened to the outer side of the tab contact plate, while the nail cap of the pin installed in hole facing the back side is fastened to the outer side of the airbag pressing plate.

Preferably, the outer side of the airbag pressing plate of the secondary airbag unit is equipped with a buffer pad.

Preferably, the outer surface of the tab contact plate is horizontally and sequentially divided into a current area, a voltage area and a sinking area extending along the length direction of the tab contact plate, there is an insulating gap between the current area and the voltage area, with the current area connected to a current lead and the voltage area connected to a voltage lead; the surface of the current area is flush with the surface of the voltage area, and the surface of the sinking area is lower than the surface of the voltage area. In practice, the current area is far wider than the voltage area, and if two area surfaces are not parallel, there is a high possibility that the voltage area makes no contact with the battery tab. The sinking area enables the battery tab to incline toward the voltage area, thereby increasing the opportunity of conduction between the voltage area and the tab of battery.

Preferably, the first airbag and the secondary airbag are made of a flexible material with high elastic modulus and good heat resistance, and the buffer pad is made of an electric insulating and elastic material, such as silicon sheets.

Preferably, the upper edge of the aluminum plate is equipped with a magnet suction plate used to attract the upper sliding block, and the lower edge is equipped with a sliding rail, within which the lower sliding block can be slidably positioned.

Preferably, the top of the upper sliding block is equipped with a tip part used for guiding a battery into the station. At the bottom of the upper sliding block, there is a rectangular groove. The upper edge of the aluminum plate passes through the rectangular groove, and the thickness of the aluminum plate is matched with the width of the rectangular groove; the top of the lower sliding block is equipped with a sliding groove that is designed to slide along the sliding rail, the cross-section of the sliding groove presents an inverted T-shape, and the sliding rail passes through the horizontal section of the cross section of the sliding groove.

Preferably, the side block is a detachable U-shaped block, and the slot opening of the longitudinal groove of the side block is connected to the side surface of either the upper sliding block or the lower sliding block.

A hot pressing fixture applying the electric connection mechanism with airbag type formation probe for soft pack batter of the present invention, both the side surfaces of the upper sliding block and the lower sliding block are equipped with side blocks that have longitudinal grooves on them;

The aluminum plate is equipped with a fixing block above its end and a linkage block below it; the fixing block is equipped with a vertical mounting hole, and the vertical mounting hole contains a linear bearing;
The linear bearing, aligned vertically, is fitted with a guide shaft through it, allowing the aluminum plates to be connected to the guide shafts in parallel; the linkage blocks of the adjacent aluminum plates are interconnected by linkage components to enable the linkage between the aluminum plates; the longitudinal groove of the longitudinally aligned electric connection device is fitted with a linkage shaft, which connects the longitudinally aligned electric connection devices to their respective linkage shaft.

The working process of the present invention is as follows:
1) The transverse distance between the two columns of electric connection devices is adjusted according to the model of the battery to make the tabs of the battery longitudinally align with the electric connection device;
2) The battery is guided by the guide block and the upper sliding block to be vertically inserted into the station, and the distance between the aluminum plates is adjusted, so that the battery is clamped by the front and the rear aluminum plate;
3) The first airbag and the secondary airbag expand after being inflated to eject the tab contact plate and the airbag pressing plate outwards in the longitudinal direction, so that the tab contact plate and the airbag pressing plate on the adjacent aluminum plate in front jointly clamp the tab of the battery;
4) The current line and the voltage line at the lower end of the tab contact plate are connected to an external power box to charge and discharge the battery in a formation process;
5) The first airbag and the secondary airbag are deflated, while the tab contact plate and the airbag pressing plate return to the initial position by the effect of the reset mechanism.

In the step 3), the tab contact plate is supported by multiple first airbags, the airbag pressing plate is supported by multiple secondary airbags, equivalently, the tab contact plate and the air bag pressing plate are horizontally supported by multiple arches, which helps prevent transverse inclination and improve the stability and the certainty of the space orientation of the tab contact plate and the airbag pressing plate, so that the transverse inclination may be effectively avoided when the tab contact plate makes contact with the tab of battery.

Another aspect of preventing the tab contact plate from inclining is to prevent the tab contact plate and the airbag pressure plate from inclining toward its own length direction. Airbags are arranged in the tab contact plate and the air bag pressing plate, and the ends of the airbags are connected to the upper sliding block and the lower sliding block. When the airbag expands, inclination between the end and the center of the air bag, which may affect the space orientation of the tab contact plate and the air bag pressing plate, needs to be prevented. In the present invention, the elastic reset mechanisms are arranged at the joints between the ends of the tab contact plate or the airbag pressing plate and the upper or lower sliding block, the ends of tab contact plate and airbag pressing plate are allowed to move outwards with the central parts of them via the reset mechanism by the tension of expansion of the airbag, so that the flatness of the tab contact plate and the airbag pressing plate in their length direction is improved.

By means of the measures, the stability and the certainty of the spatial posture of the tab contact plate and the airbag pressing plate are improved, which may ensure that the voltage area and the current area of the tab contact plate are conducted with the tab of battery simultaneously, so that the reliability of contact between the tab contact plate and the tab of battery is improved.

In step 4), the reliability of contact between the tab contact plate and the tab of battery is also improved by the buffer pad. While the tab of battery is clamped, the influence caused by the non-parallel position of airbag pressing plate and the tab of battery may be neutralized through the deformation of buffer pad.

In the step 5), while the first airbag and the secondary airbag are deflated, the spring of the reset mechanism overcomes the residual deformation of the airbag to pull the tab contact plate and airbag pressing plate back to their initial positions. Therefore, the action of mechanism of the present invention is accurate in reset process, and the station size is stable in the process of battery formation and capacity grading.

The beneficial effects of the present invention are as follows: the mechanism has the flexibility of automatically adapting to the size change of a processed battery, which may automatically adapt to soft pack batteries with various thicknesses to realize formation and capacity grading of batteries with different sizes without complex adjustment and component replacement, which allow for the pressing action without dummy batteries under the condition of non-full load in the mechanism; and with the high accuracy and certainty of the component action, the whole machine has relatively high reliability, which is suitable for application in large-scale production.

### Description of Figures

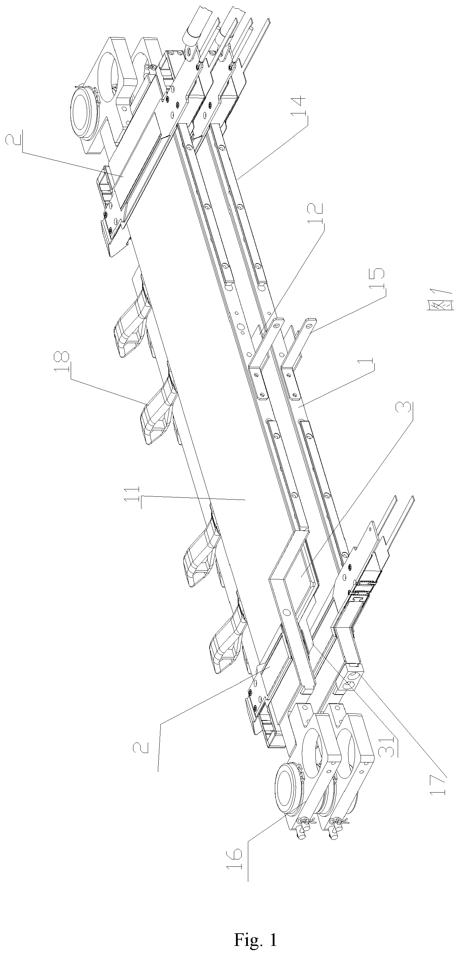

FIG. 1 is a schematic structural diagram of an electric connection mechanism of the present invention;

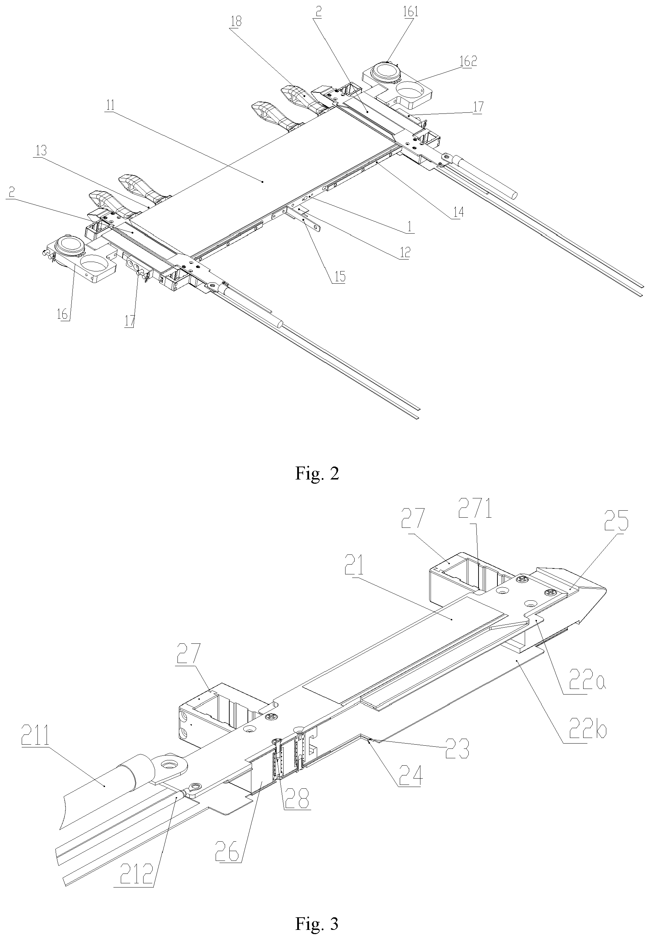

FIG. 2 is a schematic structural diagram of aluminum plate assembly of a hot-pressing fixture in the present invention;
FIG. 3 is a schematic structural diagram of an electric connection device of the present invention;

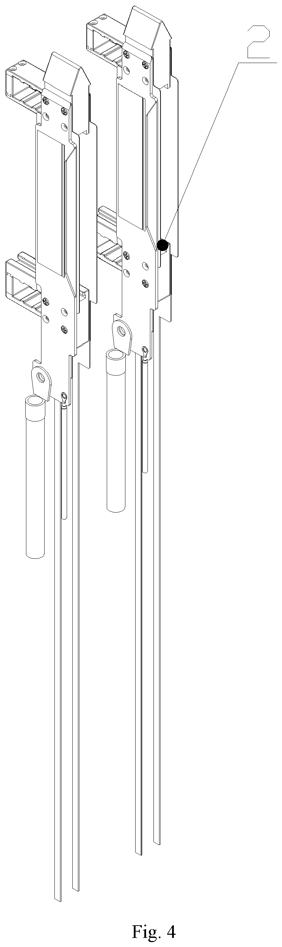

FIG. 4 is a usage schematic diagram of the electric connection device of the present invention;

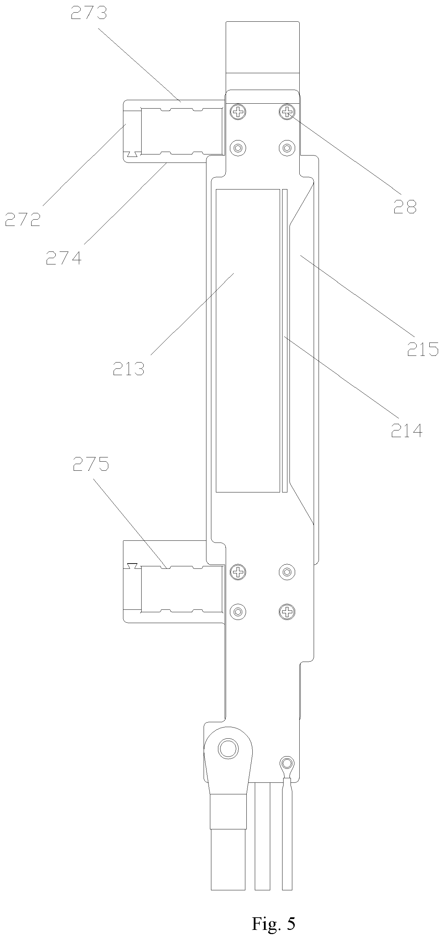

FIG. 5 is a front view of FIG. 4;

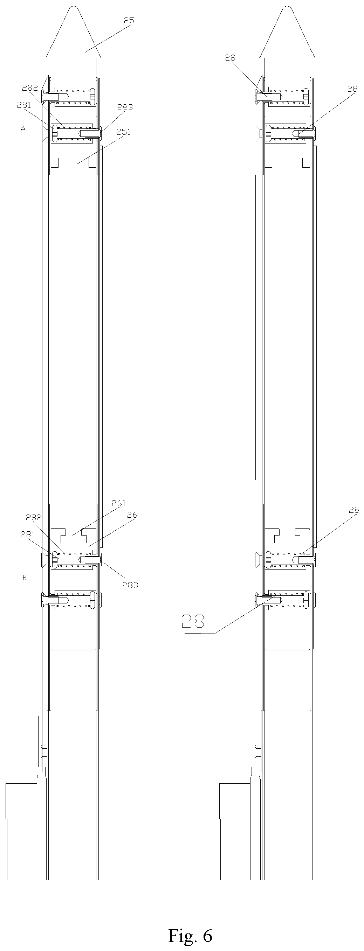

FIG. 6 is a side view of FIG. 4 of the present invention;

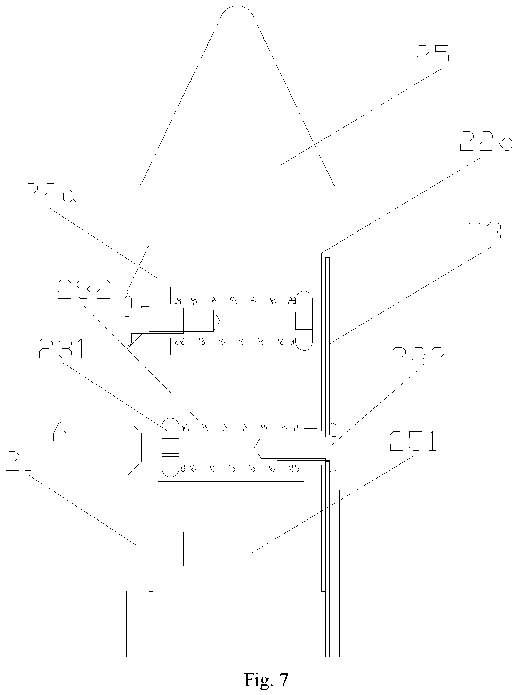

FIG. 7 is an enlarged view of the A of FIG. 6;

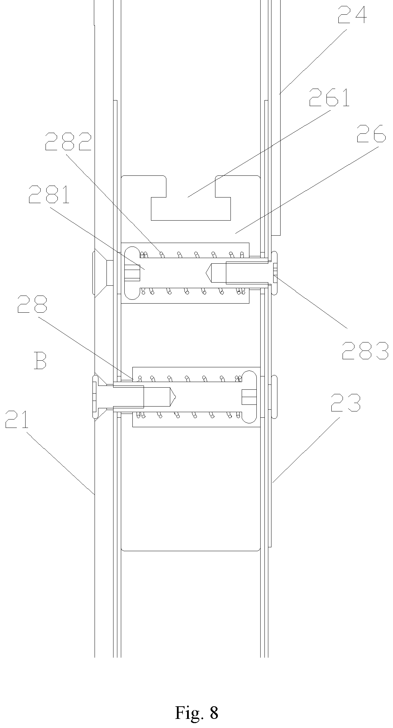

FIG. 8 is an enlarged view of the B of FIG. 6;

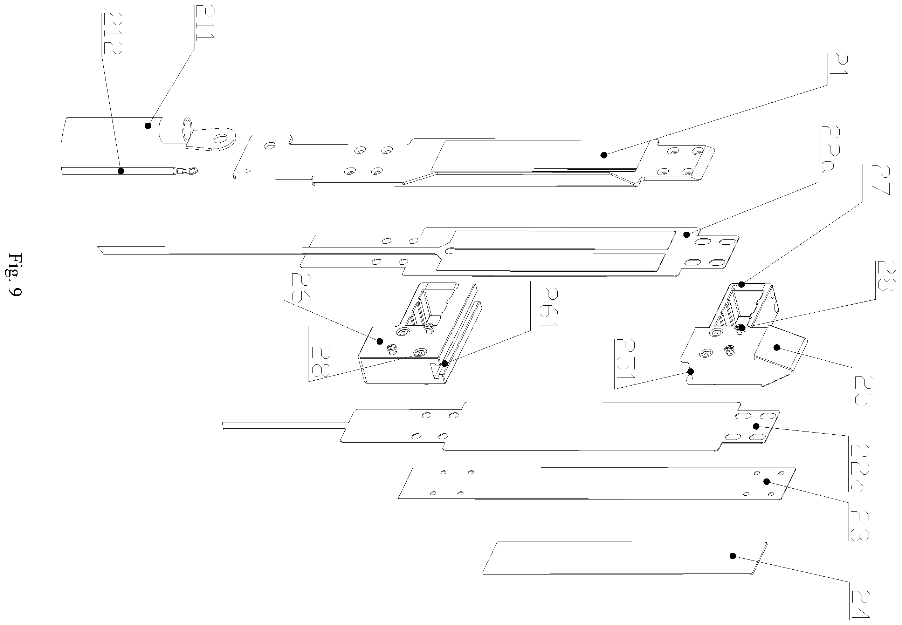

FIG. 9 is an explosion schematic of the electric connection device in the present invention;

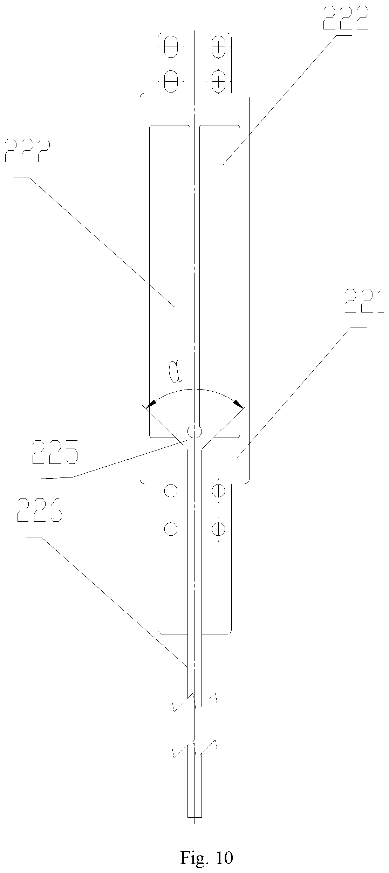

FIG. 10 is a structural diagram of a first airbag unit in the present invention;

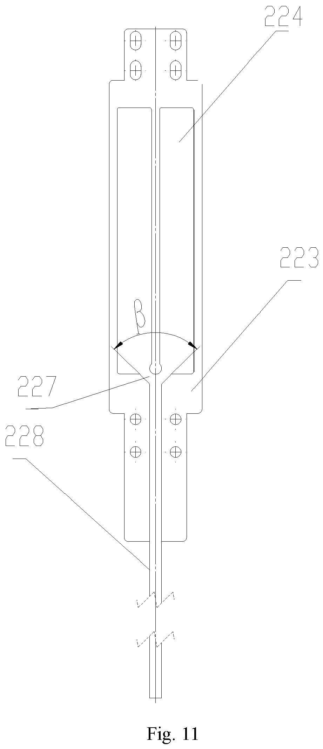

FIG. 11 is a structural diagram of a secondary airbag unit in the present invention.

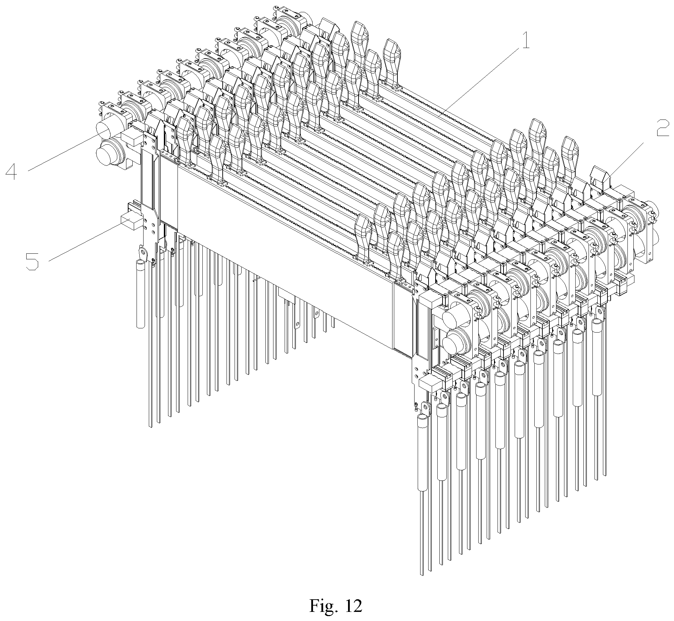

FIG. 12 is a structural diagram of the hot-pressing fixture of the present invention.

### Specific embodiment

Specific embodiments of the present invention are described in detail below with reference to the accompanying drawings. It should be understood that the specific embodiments described herein are merely illustrative and explanatory of the embodiments of the present invention and are not intended to limit the embodiments of the present invention.

In the description of the present invention, it should be understood that the orientation or positional relationship indicated by the terms " center ", " longitudinal", " transverse ", " length ", " width ", " thickness ", " upper ", " lower ", " front", " rear ", " left", " right ", " vertical ", " horizontal ", " top ", " bottom ", " inner ", " outer ", " clockwise "," counterclockwise ", " axial", " radial", " circumferential ", or the like are based on the orientation or positional relationship shown in the drawings, and the terms are intended only to facilitate and simplify the description of the present invention, rather than indicating or implying that the indicated device or element must have a specific orientation, be constructed and operated in a specific orientation, and therefore cannot be understood as a limitation to the present invention.

In addition, the terms " first " and " second " are used for description only and cannot be understood as indicating or implying relative importance or implicitly indicating the number of technical features. Thus, the features defined with " first" and " second " may explicitly or implicitly include at least one of the features. In the description of the present invention, the meaning of " multiple " is at least two, for example, two, three, etc., unless specifically defined otherwise.

In the present invention, terms such as " mounted ", " connected ", " jointed "," linked " " fixed " and the like should be construed broadly unless expressly specified and defined, for example, may be fixedly connected, or may be detachably connected, or integrated; may be mechanically connected or electrically connected with each other or may communicate with each other; may be directly connected or indirectly connected through an intermediate medium, and may be communicated with the interiors of the two elements or the interaction relation of the two elements unless explicitly defined otherwise. For a person of ordinary skill in the art, the specific meaning of the term in the present invention may be understood according to specific conditions.

In the present invention, unless expressly specified and defined otherwise, the first feature is " upper " or " lower " the second feature, which may be the first and second features are directly contacted, or the first and second features are in indirect contact through the intermediate medium. Moreover, the first feature is " above ", " upward " and " upper " the second feature, which may be that the first feature is directly above or obliquely above the second feature, or merely indicates that the level height of the first feature is greater than the second feature. The first feature is " below " , " downward " or " under " the second feature, and " below ", " downward "and " under " may be that the first feature is directly below or obliquely below the second feature, or merely indicates that the level height of the first feature is less than the second feature .

In this specification, the description of reference terms of " an embodiment, " " some embodiments, " " an example, " " a specific example, " or " some examples " means that a the particular feature, structure, material, or characteristic described in connection with the embodiment or example is included in at least one embodiment or example of the present invention. In this specification, the schematic representation of the above terms does not have to be directed to the same embodiment or example. Furthermore, the particular features, structures, materials, or characteristics described may be combined in any suitable manner in any one or more embodiments or examples. In addition, a person skilled in the art can integrate and combine different embodiments or examples and features of different embodiments or examples described in this specification without contradiction.

The present invention will be described in detail below with reference to the drawings and in conjunction with exemplary embodiments.

The electric connection mechanism with airbag type formation probe for soft pack batteries in the present invention comprises a queue formed by aluminum plates 1 which are parallel to each other and arranged at intervals, wherein the aluminum plates 1 are perpendicular to the longitudinal axis of the queue, and an electric heating component 12 is installed on the aluminum plates 1, the surfaces of the aluminum plates 1 are covered with insulating layers 11, and the space between each two adjacent aluminum plates 1 forms a station for clamping a battery; the longitudinal axis direction of the queue is defined as the longitudinal direction, with one direction being defined as the forward direction and the other direction as the backward direction; the aluminum plates 1 are rectangular, and the surface of the aluminum plates 1 facing the forward direction is defined as the front surface, while the face of the aluminum plates 1 facing the backward direction is defined as the rear surface, the extending direction of one edge of the aluminum plate 1 is defined as the left-right direction, while the extending direction of the other edge is defined as the upper-lower direction;
The left end and the right end of the aluminum plate 1 are each equipped with an electric connection device 2, which is longitudinally aligned with that of the adjacent aluminum plates 1;
The electric connection device 2 comprises an upper sliding block 25 slidably positioned on the upper edge of the aluminum plate 1, a lower sliding block 26 slidably positioned on the lower edge, a first airbag unit 22a arranged on the front surface, and a secondary airbag unit 22b located on the rear surface;
The direction closer to the aluminum plate 1 within the electric connection device 2 is defined as the inner side, while the opposite direction is defined as the outer side; the outer side of the first airbag unit 22a is equipped with a tab contact plate 21, the outer side of the secondary airbag unit 22b is equipped with an airbag pressing plate 23, the upper ends and the lower ends of the tab contact plate 21, the first airbag unit 22a, the secondary airbag unit 22b and the airbag pressing plate 23 are connected with an upper sliding block 25 and a lower sliding block 26 correspondingly; the ends of the aluminum plate 1 is inserted into a sleeve formed by the first airbag unit 22a, the secondary airbag unit 22b, the upper sliding block 25 and the lower sliding block 26;
Between the ends of the tab contact plate 21 and the upper sliding block 25, as well as between the end of the tab contact plate 21 and the lower sliding block 26, and also between the ends of the airbag pressing plate 23 and the upper sliding block 25, as well as between the airbag pressing plate 23 and the lower sliding block 26, there are reset mechanisms 28 provided, which include a reset spring 282;
The first airbag unit 22a comprises a first airbag fixing plate 221 which is equipped with multiple first airbags 222 on its outer side, the secondary airbag unit 22b comprises a secondary airbag fixing plate 223 which is equipped with multiple secondary airbags 224 on its outer side, both the first airbags 222 and secondary airbags 224 are strip-shaped and connected with an external air source; and the tab contact plate 21 is connected to an external power supply through a current lead 211 and a voltage lead 212.

In some embodiments of the present invention, the number of the first airbag 222 and the secondary airbag 224 is both two, and the first airbags 222 are parallelly arranged along the length direction of the first airbag fixing plate 221, while the secondary airbags 224 are parallelly arranged along the length direction of the secondary airbag fixing plate 223.

In some embodiments of the present invention, the reset mechanism 28 comprises a longitudinal hole on the upper sliding block 25 or the lower sliding block 26, with a flat-top screw 281 placed inside each hole that can move along the longitudinal direction, the tail end of the flat-top screw 281 extends out of the hole and is connected to a pin; a pressing spring 282 is positioned between the nail cap of the flat-top screw 281 and the wall surface of the hole, which compresses the nail cap of the flat top screw 281 against the bottom of the hole; among them, the cap of the pin 283 installed in the hole facing the front side is fastened to the outer side of the tab contact plate 21, while the nail cap of the pin 283 installed in the hole facing the back side is fastened to the outer side of the airbag pressing plate 23.

In some embodiments of the present invention, the outer side of the airbag pressing plate 23 of the secondary airbag unit 22b is equipped with a buffer pad 24.

In some embodiments of the present invention, the outer surface of the tab contact plate 21 is horizontally and sequentially divided into a current area 213, a voltage area 214 and a sinking area 215 extending along the length direction of the tab contact plate 21, there is an insulating gap between the current area 213 and the voltage area 214, with the current area 213 is connected to a current lead 211, and the voltage area 214 connected to a voltage lead 212; and the surface of the current area 213 is flush with the surface of the voltage area 214, and the surface of the sinking area 215 is lower than the surface of the voltage area 214.

In some embodiments of the present invention, the first airbag 222 and the secondary airbag 224 are made of a flexible material with high elastic modulus and good heat resistance to increase the certainty of deformation of the airbag while being inflated with the high-pressure gas, for example, TPU is adopted. The upper ends of first airbag 222 and the secondary airbag 224 are closed while the lower ends are inflatable, so that the inflating height of the airbag may be adjusted according to the thickness of the inserted battery, to realize the charging and discharging of different sizes of battery, and the compressibility of airbag may enable the pressing action without full load in the mechanism.

In some embodiments of the present invention, the two first airbag 222 share one first vent 225, which extends downward to form a first communication pipe 226, wherein the first vent 225 is a funnel-shaped contraction port, the vertex angle alpha of that is 90°, which may prevent the first airbag 222 from being torn while inflating.

In some embodiments of the present invention, the two secondary airbag 224 share one secondary vent 227, which extends downward to form a secondary communication pipe 228, wherein the secondary vent 227 is a funnel-shaped contraction port, the vertex angle beta of that is 90°, which may prevent the secondary airbag 224 from being torn while inflating.

In some embodiments of the present invention, the first airbag 222 and the secondary airbag 224 may be deflated by the vacuum equipment, so that the tab contact plate 21 and the airbag pressing plate 23 are both attached to the aluminum plate to prevent the tab from deforming.

In some embodiments of the present invention, the buffer pad 24 is made of electric insulating and elastic material, for example, a silicon sheet is adopted. On the one hand, the buffer pad 24 may play an insulating role, and on the other hand, while the tab of battery is clamped, the influence caused by the non-parallel orientation between airbag pressing plate and the tab of battery may be counteracted through the deformation of buffer pad 24, thereby preventing the tab from deforming, which may affect the quality of battery and cause the poor contact problem during formation.

In some embodiments of the present invention, the upper edge of the aluminum plate 1 is provided with a magnet suction plate 13 for magnetic adsorbing the upper sliding block 25, while the lower edge of that is provided with a sliding rail 14, and the lower sliding block 26 is slidably arranged in the sliding rail 14.

In some embodiments of the present invention, the top of the upper sliding block 25 is provided with a tip part used for guiding a battery to enter the station, while the bottom of that is provided with a rectangular groove 251, which is penetrated by the upper edge of the aluminum plate 1, and the thickness of the aluminum plate is matched with the width of the rectangular groove 251, so that the upper sliding block 25 may move in the front-back direction while slide on the upper edge of the aluminum plate 1; the top of the lower sliding block 26 is provided with a sliding groove 261 for slidably fitting with the sliding rail 14, which penetrates through the horizontal section of an inverted T shape cross section of the sliding groove 261.

In some embodiments of the present invention, the side block(27) is a detachable U-shaped block, and the slot opening of the longitudinal groove 271 of the side block 27 is connected to the side surface of either the upper sliding block 25 or the lower sliding block 26. In some other embodiments of the present invention, a cross section of the longitudinal groove 271 is rectangular.

In some embodiments of the present invention, the side block 27 includes an terminal block 272 and an upper supporting block 273 and a lower supporting block 274 arranged opposite to each other up and down, the terminal block 272 is connected to the end of the upper supporting block 273 or the lower supporting block 274 in a mortise and tenon manner to jointly enclose a U-shaped longitudinal groove 271, and a notch of the longitudinal groove 271 is connected to a side surface of the upper slide block 25 or the lower slide block 26. In some other embodiments of the present invention, a plurality of longitudinal sliders 275 are symmetrically arranged on the upper and lower groove walls of the longitudinal groove 271, which provides the convenience to replace the whole electric connection device 2.

In some embodiments of the present invention, a plurality of guide blocks 18 are arranged on the upper edge of the aluminum plate 1 at intervals. The tops of the guide blocks 18 are provided with guide tips for guiding the battery to enter the station, and the guide blocks 18 on the front and rear adjacent aluminum plates 1 may form a horn-shaped guide area with a large upper part and a small lower part above the station, so that the battery may be conveniently and smoothly inserted into the station.

A hot pressing fixture applying the electric connection mechanism with airbag type formation probe for soft pack batteries of the present invention, wherein the side blocks 27 with longitudinal grooves 271 are arranged on the side surfaces of the upper sliding block 25 and the lower sliding block 26;
A fixing block 16 is arranged at upper part of the end of the aluminum plate 1, while a linkage block 17 is arranged at lower part of that, and a longitudinal mounting hole 162 provided with linear bearing 161 is arranged on the fixing block;
The linear bearing 161, aligned vertically, is fitted with a guide shaft 4 through it, allowing the aluminum plates 1 to be connected to the guide shafts 4 in parallel; the linkage blocks 17 of the adjacent aluminum plates 1 are interconnected by linkage components to enable the linkage between the aluminum plates 1; the longitudinal groove 271 of the longitudinally aligned electric connection device 2 is fitted with a linkage shaft 5, which connects the longitudinally aligned electric connection devices 2 to their respective linkage shaft 5.

In some embodiments of the present invention, a formation lead fixture 15 is arranged on the lower edge of the aluminum plate 1 for fixing an electric wire.

The working process of the present invention is as follows:
1) The transverse distance between the two columns of electric connection devices 2 is adjusted according to the model of the battery to make the tabs 31 of the battery 3 longitudinally align with the electric connection device 2;
2) The battery 3 is guided by the guide block 18 and the upper sliding block 25 to be vertically inserted into the station, and the distance between the aluminum plates 1 is adjusted, so that the battery 3 is clamped by the front and the rear aluminum plate 1;
3) The first airbag 222 and the secondary airbag 224 expand after being inflated to eject the tab contact plate 21 and the airbag pressing plate 23 outwards in the longitudinal direction, so that the tab contact plate 21 and the airbag pressing plate 23 on the adjacent aluminum plate 1 in front jointly clamp the tab 31 of the battery 3;
4) The current line 211 and the voltage line 212 at the lower end of the tab contact plate 21 are connected to an external power box to charge and discharge the battery in a formation process;
5) The first airbag 222 and the secondary airbag 224 are deflated, while the tab contact plate 21 and the airbag pressing plate 23 return to the initial position by the effect of the reset mechanism 28.

In the step 3), the tab contact plate 21 is supported by a plurality of first airbags 222, the airbag pressing plate 23 is supported by a plurality of secondary airbags 224, equivalently, the tab contact plate 21 and the air bag pressing plate 23 are transversely supported by plurality of arches, which helps prevent transverse inclination and improve the stability and the certainty of the space posture of the tab contact plate 21 and the airbag pressing plate 23, so that the transverse inclination may be effectively avoided when the tab contact plate 21 makes contact with the tab 31 of battery 3.

Another aspect of preventing the tab contact plate 21 from inclining is to prevent the tab contact plate and the airbag pressure plate from inclining toward its own length direction. Airbags are arranged in the tab contact plate 21 and the air bag pressing plate 23, and the ends of the airbags are connected to the upper sliding block 25 and the lower sliding block 26. When the airbag expands, inclination between the end and the center of the air bag, which may affect the space orientation of the tab contact plate 21 and the air bag pressing plate 23, needs to be prevented. In the present invention, the elastic reset mechanisms are arranged at the joints between the ends of the tab contact plate 21 or the airbag pressing plate 23 and the upper or lower sliding block, the ends of tab contact plate 21 and airbag pressing plate 23 are allowed to move outwards with the central parts of that via the reset mechanism 28 by the tension of expansion of the airbag, so that the flatness of the tab contact plate 21 and the airbag pressing plate 23 in the length direction is improved.

By means of the measures, the stability and the certainty of the spatial posture of the tab contact plate 21 and the airbag pressing plate 23 are improved, which may ensure that the voltage area 214 and the current area 213 of the tab contact plate 21 are conducted with the tab 31 of battery 3 simutaneously, so that the reliability of contact between the tab contact plate 21 and the tab 31 of battery is improved.

In step 4), the reliability of contact between the tab contact plate 21 and the tab 31 of battery is also improved by the buffer pad 24. While the tab 31 of battery is clamped, the influence cause by the non-parallel position of airbag pressing plate 23 and the tab 31 of battery may be neutralized through the deformation of buffer pad 24.

In the step 5), while the first airbag 222 and the secondary airbag 224 are deflated, the reset spring 282 of the reset mechanism 28 overcomes the residual deformation of the airbag to pull the tab contact plate 21 and airbag pressing plate 23 back to the initial position. Therefore, the action of mechanism of the present invention is accurate in reset process, and the station size is stable in the process of battery formation and capacity grading.

Although the embodiment of the invention has been shown and described above, it can be understood that the above-mentioned embodiments are exemplary and cannot be understood as limitations to the present invention, and a person of ordinary skill in the art can change, modify, replace and deform the above-mentioned embodiments within the scope of the present invention.

## Claims

1. An electric connection mechanism with airbag type formation probe for soft pack batteries, comprising a queue formed by aluminum plates(1) which are parallel to each other and arranged at intervals, wherein the aluminum plates(1) are perpendicular to the longitudinal axis of the queue, and an electric heating component(12) is installed on the aluminum plates(1), the surfaces of the aluminum plates(1) are covered with insulating layers, and the space between each two adjacent aluminum plates(1) forms a station for clamping a battery; the longitudinal axis direction of the queue is defined as the longitudinal direction, with one direction being defined as the forward direction and the other direction as the backward direction; the aluminum plates(1) are rectangular, and the surface of the aluminum plates(1) facing the forward direction is defined as the front surface, while the face of the aluminum plates(1) facing the backward direction is defined as the rear surface, the extending direction of one edge of the aluminum plate(1) is defined as the left-right direction, while the extending direction of the other edge is defined as the upper-lower direction, wherein:
The left end and the right end of the aluminum plate(1) are each equipped with an electric connection device(2), which is longitudinally aligned with that of the adjacent aluminum plates(1);
The electric connection device(2) comprises an upper sliding block(25) slidably positioned on the upper edge of the aluminum plate(1), a lower sliding block(26) slidably positioned on the lower edge, a first airbag unit(22a) arranged on the front surface, and a secondary airbag unit(22b) located on the rear surface;
The direction closer to the aluminum plate(1) within the electric connection device(2) is defined as the inner side, while the opposite direction is defined as the outer side; the outer side of the first airbag unit(22a) is equipped with a tab contact plate(21), the outer side of the secondary airbag unit(22b) is equipped with an airbag pressing plate(23), the upper ends and the lower ends of the tab contact plate(21), the first airbag unit(22a), the secondary airbag unit(22b) and the airbag pressing plate(23) are connected with an upper sliding block(25) and a lower sliding block(26) correspondingly; the ends of the aluminum plate(1) are inserted into a sleeve formed by the first airbag unit(22a), the secondary airbag unit(22b), the upper sliding block(25) and the lower sliding block(26);
Between the ends of the tab contact plate(21) and the upper sliding block(25), as well as between the ends of the tab contact plate(21) and the lower sliding block(26), and also between the ends of the airbag pressing plate(23) and the upper sliding block(25), as well as between the airbag pressing plate(23) and the lower sliding block(26), there are reset mechanisms(28) provided, which include a reset spring(282).
The first airbag unit(22a) comprises a first airbag fixing plate(221) which is equipped with multiple first airbags(222) on its outer side, the secondary airbag unit(22b) comprises a secondary airbag fixing plate(223) which is equipped with multiple secondary airbags(224) on its outer side, both the first airbags(222) and secondary airbags(224) are strip-shaped and connected to an external air source; the tab contact plate(21) is connected to an external power source via a current lead(211) and a voltage lead(212).

2. An electric connection mechanism with airbag type formation probe for soft pack batteries, as claimed in claim 1, **characterized in that**: the number of the first airbag(222) and the secondary airbag(224) is both two, and the first airbags(222) are parallelly arranged along the length direction of the first airbag fixing plate(221), while the secondary airbags are(224) parallelly arranged along the length direction of the secondary airbag fixing plate(223).

3. An electric connection mechanism with airbag type formation probe for soft pack batteries in claim 1, **characterized in that**: the reset mechanism(28) comprises a longitudinal hole on the upper sliding block(25) or the lower sliding block(26), with a flat-top screw(281) placed inside each hole that can move along the longitudinal direction, the tail end of the flat-top screw(281) extends out of the hole and is connected to a pin(283); a pressing spring(282) is positioned between the nail cap of the flat-top screw(281) and the wall surface of the hole, which compresses the nail cap of the flat-top screw(281) against the bottom of the hole; among them, the cap of the pin(283) installed in the hole facing the front side is fastened to the outer side of the tab contact plate(21), while the nail cap of the pin(283) installed in hole facing the back side is fastened to the outer side of the airbag pressing plate(23).

4. An electric connection mechanism with airbag type formation probe for soft pack batteries as claimed in claim 2, **characterized in that**: the reset mechanism(28) comprises a longitudinal hole formed in the upper sliding block(25) or the lower sliding block(26), the hole contains a flat-top screw(281) that can move along the longitudinal direction of the hole, the tail end of the flat-top screw(281) protrudes from the hole's opening and is connected to a pin(283), a pressing spring(282) is positioned between the nail cap of the flat-top screw(281) and the wall surface of the hole, which compresses the nail cap of the flat-top screw(281) against the bottom of the hole; among them, the nail cap of the pin(283) installed in the hole facing the forward is fastened to the outer side of the tab contact plate(21), while the nail cap of the pin(283) installed in the hole facing backward is fastened to the outer side of the airbag pressing plate(23).

5. An electric connection mechanism with airbag type formation probe for soft pack batteries, as claimed in any one of claims 1~4, **characterized in that**: the outer side of the airbag pressing plate(23) of the secondary airbag unit(22b) is equipped with a buffer pad(24).

6. An electric connection mechanism with airbag type formation probe for soft pack batteries, as claimed in claim 5, **characterized in that**: the outer surface of the tab contact plate(21) is horizontally and sequentially divided into a current area(213), a voltage area(214) and a sinking area(215) extending along the length direction of the tab contact plate(21), there is an insulating gap between the current area(213) and the voltage area(214), with the current area(213) connected to a current lead(211) and the voltage area(214) connected to a voltage lead(212); the surface of the current area(213) is flush with the surface of the voltage area(214), and the surface of the sinking area(215) is lower than the surface of the voltage area(214).

7. An electric connection mechanism with airbag type formation probe for soft pack batteries, as claimed in claim 6, **characterized in that**: the first airbag(222) and the secondary airbag(224) are made of a flexible material with high elastic modulus and good heat resistance, and the buffer pad(24) is made of an electric insulating and elastic material.

8. An electric connection mechanism with airbag type formation probe for soft pack batteries, as is claimed in claim 7, **characterized in that**: the upper edge of the aluminum plate(1) is equipped with a magnet suction plate(13) used to attract the upper sliding block(25), and the lower edge of the aluminum plate(1) is equipped with a sliding rail(14), within which the lower sliding block(26) can be slidably positioned.

9. An electric connection mechanism with airbag type formation probe for soft pack batteries, as is claimed in claim 8, **characterized in that**: the top of the upper sliding block(25) is equipped with a tip part used for guiding a battery into the station, at the bottom of the upper sliding block, there is a rectangular groove(251), the upper edge of the aluminum plate(1) passes through the rectangular groove(251), and the thickness of the aluminum plate(1) is matched with the width of the rectangular groove(251); the top of the lower sliding block(26) is equipped with a sliding groove(261) that is designed to slide along the sliding rail(14), the cross-section of the sliding groove presents an inverted T-shape, and the sliding rail(14) passes through the horizontal section of the cross section of the sliding groove(261).

10. An electric connection mechanism with airbag type formation probe for soft pack batteries, as is claimed in claim 9, **characterized in that**: the side block(27) is a detachable U-shaped block, and the slot opening of the longitudinal groove(271) of the side block(27) is connected to the side surface of either the upper sliding block(25) or the lower sliding block(26).

11. A hot pressing fixture applying the electric connection mechanism with airbag type formation probe for soft pack batteries, as is claimed in claim 10, **characterized in that**: both the side surfaces of the upper sliding block(25) and the lower sliding block(26) are equipped with side blocks(27) that have longitudinal grooves(271) on them.
The aluminum plate(1) is equipped with a fixing block(16) above its end and a linkage block(17) below it; the fixing block(16) is equipped with a vertical mounting hole(162), and the vertical mounting hole(162) contains a linear bearing(161).
The linear bearing(161), aligned vertically, is fitted with a guide shaft(4) through it, allowing the aluminum plates(1) to be connected to the guide shafts(4) in parallel; the linkage blocks(17) of the adjacent aluminum plates(1) are interconnected by linkage components to enable the linkage between the aluminum plates(1); the longitudinal groove(271) of the longitudinally aligned electric connection device(2) is fitted with a linkage shaft(5), which connects the longitudinally aligned electric connection devices(2) to their respective linkage shaft(5).
